# EUROPEAN PATENT APPLICATION

(11) **EP 4 773 108 A1**
(43) Date of publication of application: **08.07.2026**
(21) Application number: 23950732.0
(22) Date of filing: 30.08.2023
(51) Int. Cl.: G06V 40/16

(54) **PERSON AUTHENTICATION PROGRAM, PERSON AUTHENTICATION METHOD, AND PERSON AUTHENTICATION DEVICE**

(71) Applicant: FUJITSU LIMITED, Kawasaki-shi, Kanagawa 211-8588 (JP)
(72) Inventor: OUCHI, Yumo, Kawasaki-shi, Kanagawa 211-8588 (JP)
(74) Representative: Hoffmann Eitle
(86) International application number: PCT/JP2023/031470
(87) International publication number: WO 2025/046784

(57) **Abstract**

A person authentication program is a person authentication program for causing a computer to execute a process, the computer being connected to a first camera for capturing an image of one or more persons present in a monitoring target area as a whole and a second camera for capturing an image of a head of a person when the person is individually authenticated at an entrance of the monitoring target area, the process including: selecting a specific head image satisfying a condition from among head images representing the head of the person appearing in the image captured by the first camera when the person is recognized as being in front of the second camera; comparing the specific head image with the image captured by the second camera; and associating an identifier obtained as an authentication result with a specific person corresponding to the specific head image for which a degree of similarity equal to or greater than a threshold degree of similarity is calculated.

## Description

### TECHNICAL FIELD

The present disclosure relates to a person authentication program, a person authentication method, and a person authentication device.

### BACKGROUND ART

In order to restrict the persons who pass through the entrance, there are cases where control is performed such that the face of the person passing through is photographed from the front to perform authentication processing, and the entrance is opened and closed according to the authentication result. In this case, in order to monitor an unauthorized person who tries to illegally pass through the entrance without being authenticated, the vicinity of the entrance is photographed from above to track the person. A person detecting apparatus for detecting a person from each of images captured by a plurality of cameras and detecting the same person in association with the detected person is known (see, for example, Patent Document 1).

In addition, image tracking techniques and techniques for automatically determining the timing of photographing by utilizing the recognition of a smile from a subject included in an image are known (see, for example, Patent Documents 2 to 5).

### CITATION LIST

### PATENT DOCUMENT

PATENT DOCUMENT 1: Japanese Patent Application Publication No. 2015-114917
PATENT DOCUMENT 2: Japanese Patent Application Publication No. 2010-016878
PATENT DOCUMENT 3: Japanese Patent Application Publication No. 2000-222576
PATENT DOCUMENT 4: US Patent Application Publication No. 2017/0178345
PATENT DOCUMENT 5: US Patent Application Publication No. 2020/0074816

### SUMMARY OF THE INVENTION

### TECHNICAL PROBLEM

Incidentally, when the face of a person including a passer is photographed from the front and authentication processing is performed, there is a possibility that a plurality of persons appear in the authentication processing by accident. In this case, even if the person tracking process is performed by shooting the vicinity of the entrance from the overhead view, it may not be possible to uniquely identify which person is the target person of the authentication process. For example, it is assumed that a limit on the number of persons for the authentication process is provided near the entrance, but there is a possibility that the vicinity of the entrance is congested and the convenience of the authentication process is reduced.

It is also assumed that when a specific pattern such as a smile is recognized from the overhead photographed image, the person is determined to be the target person of the authentication processing and the tracking processing of the person is performed. However, if the pattern separation accuracy is low, the person to be subjected to the authentication process may not be uniquely specified, and the tracking process may not be performed normally.

Therefore, an object of one aspect is to provide a person authentication program, a person authentication method, and a person authentication device for uniquely specifying a person to be subjected to authentication processing.

### SOLUTION TO PROBLEM

In one embodiment, a person authentication program is a person authentication program for causing a computer to execute a process, the computer being connected to a first camera for capturing an image of one or more persons present in a monitoring target area as a whole and a second camera for capturing an image of a head of a person when the person is individually authenticated at an entrance of the monitoring target area, the process including: selecting a specific head image satisfying a condition from among head images representing the head of the person appearing in the image captured by the first camera when the person is recognized as being in front of the second camera; comparing the specific head image with the image captured by the second camera; and associating an identifier obtained as an authentication result with a specific person corresponding to the specific head image for which a degree of similarity equal to or greater than a threshold degree of similarity is calculated.

### ADVANTAGEOUS EFFECTS OF INVENTION]

A person to be subjected to authentication processing can be uniquely specified.

### BRIEF DESCRIPTION OF THE DRAWINGS

[FIG. 1] Illustrated is an example of a person monitoring system.
[FIG. 2] Illustrated is an example of a side view of the vicinity of the entrance in the monitoring target region.
[FIG. 3] Illustrated is an example of a hardware configuration of the person authentication device.
[FIG. 4] Illustrated is an example of a functional configuration of the person authentication device.
[FIG. 5] (a) illustrates an example of authentication information. (b) illustrates another example of the authentication information.
[FIG. 6] (a) illustrates an example of a wide area image in which two persons appear. (b) illustrates an example of a wide area image on which person detection and head detection are performed.
[FIG. 7] Illustrated is an example of second head information.
[FIG. 8] Presented is a flowchart showing an example of a process executed by the person authentication device.
[FIG. 9] Illustrated is another example of the second head information.
[FIG. 10] Illustrated is an example of generation of first head information.
[FIG. 11] Illustrated is an example of selecting an optimal head image.
[FIG. 12] (a) illustrates a calculation example of the degree of similarity. (b) illustrates an example of association of the person ID.
[FIG. 13] Illustrated is an example of a wide area image in which one person appears.
[FIG. 14] (a) illustrates an example of a wide area image in which the distance between the person and an authentication camera is equal to or greater than a threshold distance. (b) illustrates an example of a wide area image for explaining the distances between two persons and the authentication camera.

### DESCRIPTION OF EMBODIMENTS

Hereinafter, embodiments for carrying out the present disclosure will be described with reference to the drawings.

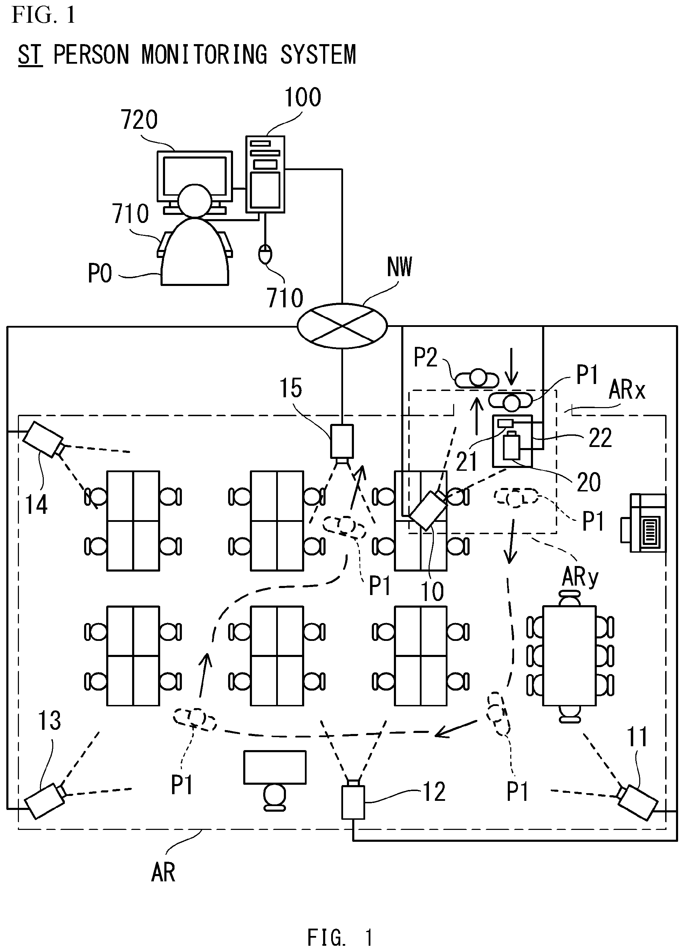

As illustrated in FIG. 1, a person monitoring system ST includes a monitoring camera 10, an authentication camera 20, an authentication information reader 21, and a person authentication device 100. The monitoring camera 10 is an example of a first camera, and the authentication camera 20 is an example of a second camera. The person authentication device 100 is an example of a computer. The person monitoring system ST may include a plurality of monitoring cameras 11, 12, 13, 14, 15.

The monitoring cameras 10, 11, 12, 13, 14, 15, the authentication camera 20, and the authentication information reader 21 are connected to the person authentication device 100 via the communication network NW. The communication network NW includes at least one of a local area network (LAN), a wide area network (WAN), and the Internet.

An input device 710 and a display device 720 are connected to the person authentication device 100. The input device 710 includes, for example, a keyboard, a mouse, and a touch panel. The display device 720 is, for example, a liquid crystal display. The input device 710 is operated by, for example, an administrator P0 of the person monitoring system ST. The person authentication device 100 displays, for example, a wide-area captured image (hereinafter simply referred to as a wide-area image) captured by the monitoring camera 10 on the display device 720 based on an operation performed on the input device 710. The person authentication device 100 also tracks a same person P1 appearing in the wide area image by associating them to each other based on the wide area image captured by at least one of the monitoring cameras 10, 11, 12, 13, 14, 15.

Each of the monitoring cameras 10, 11, 12, 13, 14, 15 captures an image of the monitoring target area AR in color in a bird's-eye view. For example, when the monitoring target area AR is an office, the monitoring cameras 10, 11, 12, 13, 14, 15 are installed above the heads of the persons P1, P2, such as on a ceiling. Thus, for example, the monitoring camera 10 captures an entire body of the persons P1, P2 in the monitoring target area AR and an entire inside of the imaging area including the authentication camera 20 and the authentication information reader 21. The monitoring target area AR is not limited to an office, and may be a medical facility such as a hospital or a clinic, a public facility such as an airport or a station, or a commercial facility such as a shopping mall.

The monitoring camera 10 is installed so as to pick up an image of the person P1 who is positioned in front of the authentication camera 20 and the authentication information reader 21. Thus, the person P1 appears partially or entirely in the wide area image of the monitoring camera 10. At this time, the monitoring camera 10 is installed so that the head of the person P1 does not overlap with the authentication camera 20 and the authentication information reader 21 in the wide area image. Thus, the face of the person P1 appears in the wide area image of the monitoring camera 10 without being hidden by the authentication camera 20 and the authentication information reader 21.

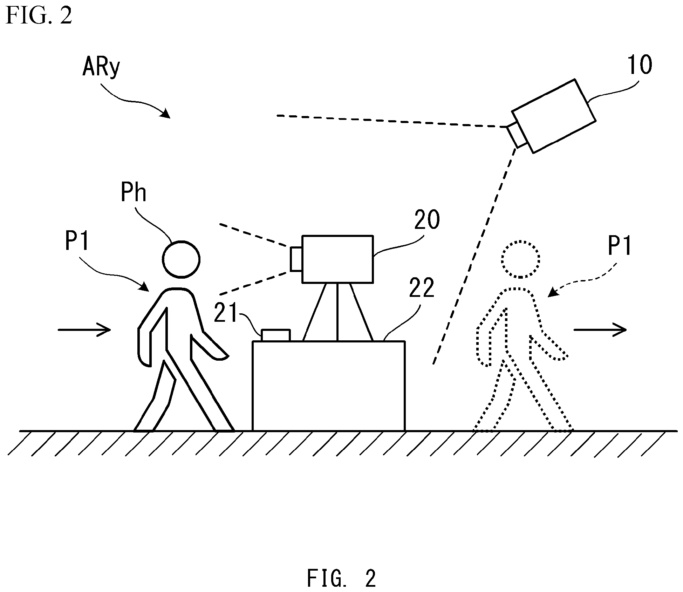

The authentication camera 20 captures, for example, a color image of the head of the person P1 from the front of the person P1. More specifically, as illustrated in FIG. 2, the authentication camera 20 is installed above a pedestal 22 via a tripod. Then, the imaging range of the authentication camera 20 is adjusted so as to image a head Ph of the person P1 from the front. FIG. 2 corresponds to a predetermined area ARy illustrated in FIG. 1. The tripod may be extended to remove the pedestal 22, or the tripod may be removed from the authentication camera 20 and the authentication camera 20 may be directly installed on the top surface of the pedestal 22.

On the other hand, as illustrated in FIG. 1, the authentication information reader 21 individually authenticates, for example, the person P1 at an entrance ARx of the monitoring target area AR. As illustrated in FIG. 2, the authentication information reader 21 is installed on a top surface of the pedestal 22. The authentication information reader 21 is installed in front of the authentication camera 20. The authentication information reader 21 reads biometric information relating to the biometric authentication and communicates with the person authentication device 100 to authenticate the person P1. The authentication information reader 21 reads card information (e.g., an identification number of an identical person) recorded in an identifier (ID) card carried by the person P1 and communicates with the person authentication device 100 to authenticate the person P1. The ID card is an example of a person identification medium. In this way, the authentication information reader 21 individually authenticates the person P1, and the authentication camera 20 captures the head Ph of the person P1 as a supplementary image during an authentication process by the authentication information reader 21.

The above-described biometric authentication may be fingerprint authentication, vein authentication, or iris authentication. In the present embodiment, the authentication of the person P1 is performed by using both the authentication camera 20 and the authentication information reader 21. On the other hand, when a face authentication camera is used as the authentication camera 20, the authentication information reader 21 may be excluded from the person monitoring system ST. The face authentication camera communicates with the person authentication device 100 to authenticate the person P1 by a face image (i.e., an image of a face).

In this way, when the person P1 enters the monitoring target area AR, the authentication information reader 21 reads the biometric information of the person P1 or the card information of the ID card carried by the person P1. Since the authentication information reader 21 is installed in front of the authentication camera 20, when the authentication information reader 21 authenticates the person P1, the authentication camera 20 captures an image of the head Ph of the person P1. The biometric information or the card information is transmitted from the authentication information reader 21 to the person authentication device 100. A head image at the time of authentication (hereinafter referred to as an authentication head image) including the head Ph of the person P1 is transmitted from the authentication camera 20 to the person authentication device 100.

The person authentication device 100 authenticates the person P1 based on the biological information or the card information, and associates the authentication result with the authentication head image of the person P1 and holds the result as first head information. As will be described in detail later, when the person authentication device 100 receives the authentication head image of the person P1, the person authentication device 100 estimates a direction of the head Ph based on the authentication head image. More specifically, the person authentication device 100 calculates a head direction vector based on the authentication head image. The head direction vector represents, for example, the direction of the face of the person P1. The person authentication device 100 also holds the head direction vector as the first head information in association with the authentication result.

On the other hand, the monitoring camera 10 captures an image of the authentication information reader 21 when the authentication information reader 21 authenticates the person P1. The wide-area image of the monitoring camera 10 is transmitted from the monitoring camera 10 to the person authentication device 100 periodically (for example, every several seconds). As illustrated in FIG. 1, if the image capturing range of the monitoring camera 10 includes not only the person P1 but also the person P2, both a whole body of the person P1 and a whole body of the person P2 appear in the image capturing range of the monitoring camera 10.

As will be described in detail later, when the person authentication device 100 receives the wide-area image of the monitoring camera 10, the person authentication device 100 detects the whole body of each of the persons P1, P2 appearing in the wide-area image, and assigns different temporary identification information (hereinafter referred to as a temporary ID) to each of the persons P1, P2. The person authentication device 100 detects the head from the images of the whole bodies of the persons P1, P2, and estimates the direction of the head based on the head image representing the detected head (hereinafter referred to as a detected head image). That is, the person authentication device 100 calculates a head direction vector.

When the head direction vector is calculated, the person authentication device 100 associates the temporary ID, the head direction vector, the detected head image, and the acquisition date and time when the wide area image is acquired, and stores them as second head information. When the person authentication device 100 stores the second head information, the same person is specified based on the first head information and the second head information. That is, the person authentication device 100 specifies the person P1 as the authentication target who is in front of the authentication camera 20 from among the persons P1, P2 appearing in the wide area image of the monitoring camera 10. When the person authentication device 100 specifies the same person, the person authentication device 100 replaces the temporary ID assigned to the person P1 with an identical person ID for identifying the person P1 himself.

In this way, the person authentication device 100 can accurately associate the identical person ID with the person P1 to which the temporary ID is assigned without detecting a specific pattern such as a smile, and can track the person P1 moving in the monitoring target area AR thereafter. Thus, for example, even if the person P1 performs an illegal action in the monitoring target area AR, the person authentication device 100 can uniquely specify the person P1. Further, the person authentication device 100 can uniquely grasp a state of movement of the person P1 in the monitoring target area AR.

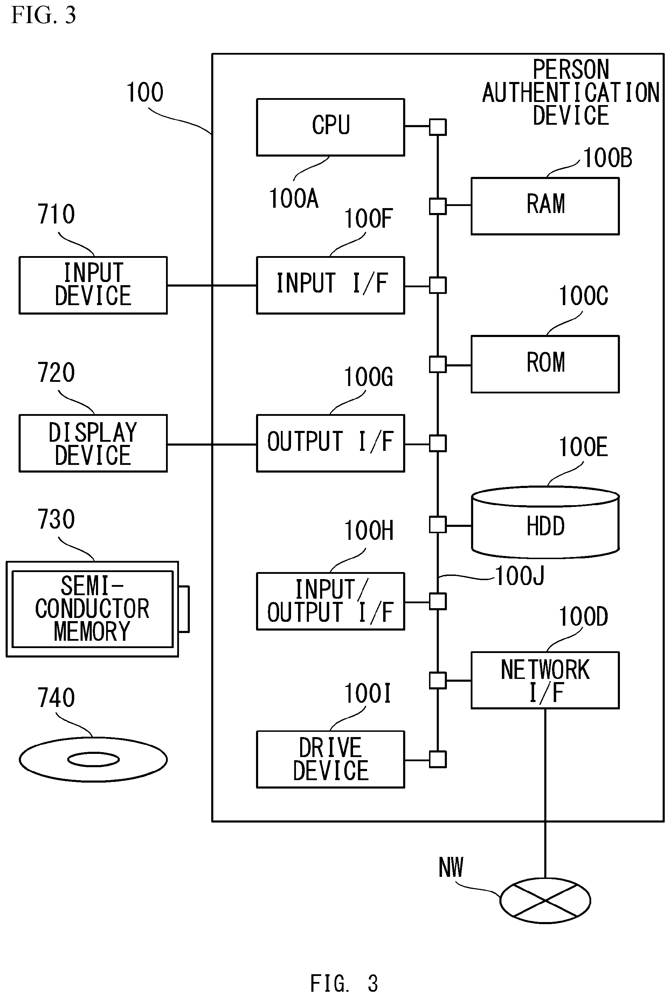

Next, referring to FIG. 3, the hardware configuration of the person authentication device 100 will be described.

The person authentication device 100 includes a central processing unit (CPU) 100A as a processor, a random-access memory (RAM) 100B as a memory, and a read only memory (ROM) 100C. The RAM100B includes a dynamic RAM (DRAM) and a static RAM (SRAM). The SRAM may be included in the CPU 100A. The person authentication device 100 includes a network interface (I/F) 100D and a hard disk drive (HDD) 100E. Instead of the HDD 100E, a solid-state drive (SSD) may be adopted.

The person authentication device 100 may include at least one of an input I/F 100F, an output I/F 100G, an input/output I/F 100H, and a drive device 100I as required. The CPU 100A to the drive device 100I are connected to each other by an internal bus 100J. That is, the person authentication device 100 can be realized by a computer.

The input device 710 is connected to the input I/F 100F. The display device 720 is connected to the output I/F 100G. The input/output I/F 100H is connected to a semiconductor memory 730. The semiconductor memory 730 is, for example, a universal serial bus (USB) memory or a flash memory. The input/output I/F 100H reads a person authentication program stored in the semiconductor memory 730. The input I/F 100F and the input/output I/F 100H include, for example, USB ports. The output I/F 100G includes, for example, a display port.

A portable recording medium 740 is inserted into the drive device 100I. The portable recording medium 740 includes, for example, a removable disc such as a compact disc (CD) - ROM or a digital versatile disc (DVD). The drive device 100I reads the person authentication program recorded in the portable recording medium 740. The network I/F 100D includes, for example, a LAN port and a communication circuit. The communication circuit includes either one or both of a wired communication circuit and a wireless communication circuit. The network I/F 100D is connected to the communication network NW.

The person authentication program stored in at least one of the ROM 100C, the HDD 100E, and the semiconductor memory 730 is temporarily stored in the RAM 100B by the CPU 100A. The RAM 100B temporarily stores the person authentication program recorded in the portable recording medium 740 by the CPU 100A. The CPU 100A executes the stored person authentication program to realize various functions described later and to execute a person authentication method including various processes described later. The person authentication program may be one corresponding to a flowchart described later.

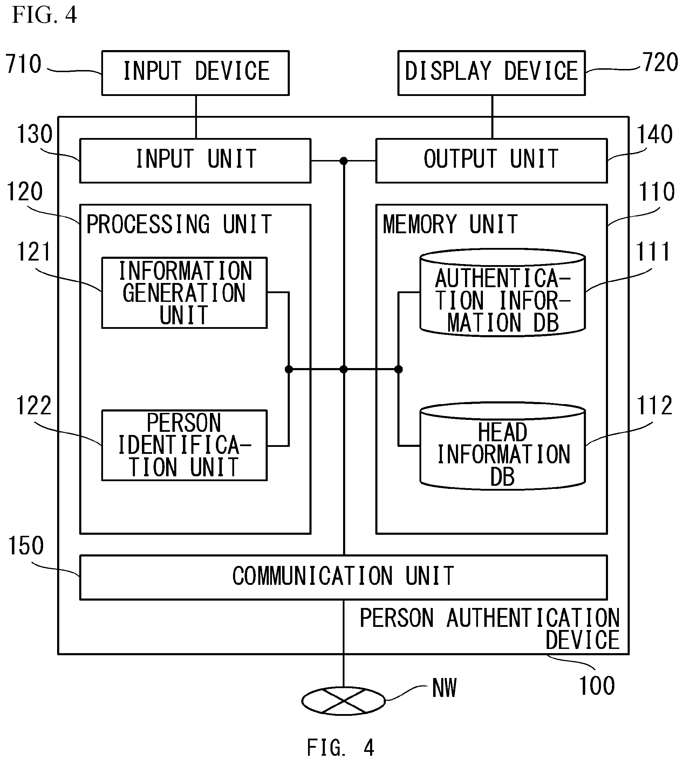

Referring to FIGS. 4 to 7, the functional configuration of the person authentication device 100 will be described. FIG. 4 illustrates a main part of the function of the person authentication device 100.

As illustrated in FIG. 4, the person authentication device 100 includes a memory unit 110, a processing unit 120, an input unit 130, an output unit 140, and a communication unit 150. The memory unit 110 can be realized by either or both of the RAM 100B and the HDD 100E described above. The processing unit 120 can be realized by the CPU 100A described above. The input unit 130 can be realized by the input I/F 100F described above. The output unit 140 can be realized by the output I/F 100G described above. The communication unit 150 can be realized by the network I/F 100D described above.

The memory unit 110, the processing unit 120, the input unit 130, the output unit 140, and the communication unit 150 are connected to each other. The memory unit 110 includes an authentication information database (DB) 111 and a head information DB 112. The processing unit 120 includes a head information generation unit 121 and a person identification unit 122. The person identification unit 122 is an example of a selection unit and an association unit.

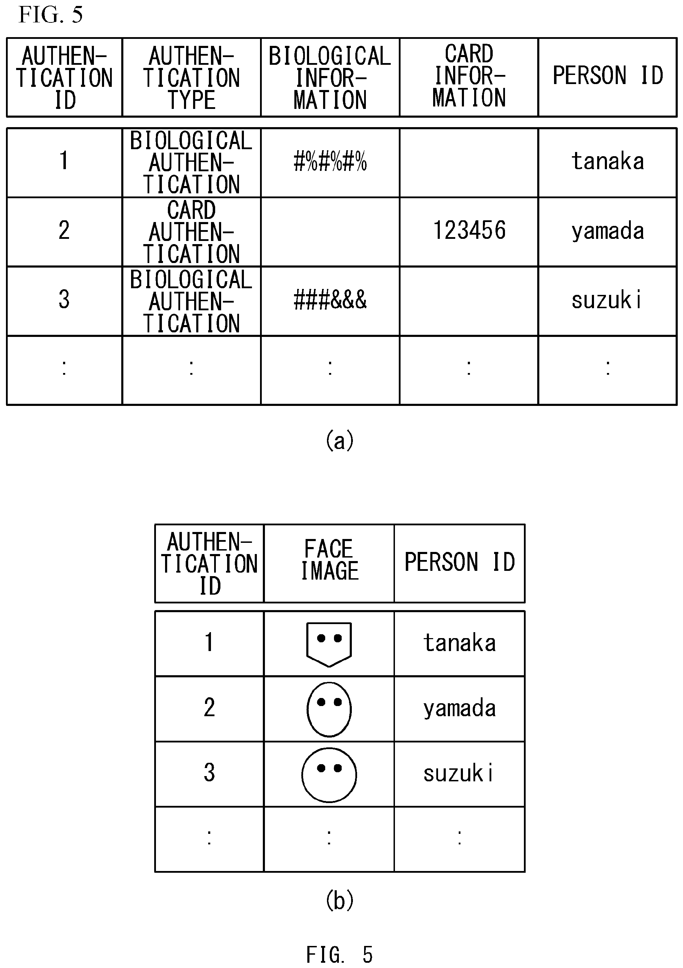

The authentication information DB 111 stores authentication information required for authentication of a plurality of persons including the persons P1, P2 in advance. As illustrated in FIG. 5(a), the authentication information includes a plurality of items such as an authentication ID, an authentication type, the biological information, the card information, and a person ID. In the item of the authentication ID, an identifier for identifying authentication information is registered. In the item of the authentication type, an authentication method is registered. The authentication methods include, for example, biometric authentication and card authentication.

In the item of the biological information, the biological information for uniquely identifying each of the plurality of persons is registered. When the authentication method is the biometric authentication, the biometric information is registered in the item of the biometric information. In the item of the card information, the card information recorded in the ID card carried by each of the plurality of persons is registered. When the authentication method is the card authentication, the card information is registered in the item of card information. In the item of person ID, identifiers for identifying a plurality of persons are registered. For example, when the biometric information "#%#%#%" is registered as the biometric information of the person P1 in the item of the biometric information, the person ID "tanaka" is uniquely specified as the person ID of the person P1 based on the biometric information "#%#%#%".

When a face authentication camera is used as the authentication camera 20, as illustrated in FIG. 5(b), the authentication information may include a plurality of items such as an authentication ID, a face image, and a person ID. For example, when the face image of a face having a pentagon outline is registered as the face image of the person P1 in the item of the face image, the person ID "tanaka" is uniquely specified as the person ID of the person P1 based on this face image. For example, a color of hair may be used for the authentication based on the face image.

The head information generation unit 121 generates the first head information and the second head information described above. When the first head information is generated, the head information generation unit 121 holds the first head information. When the second head information is generated, the head information generation unit 121 saves the second head information in the head information DB 112.

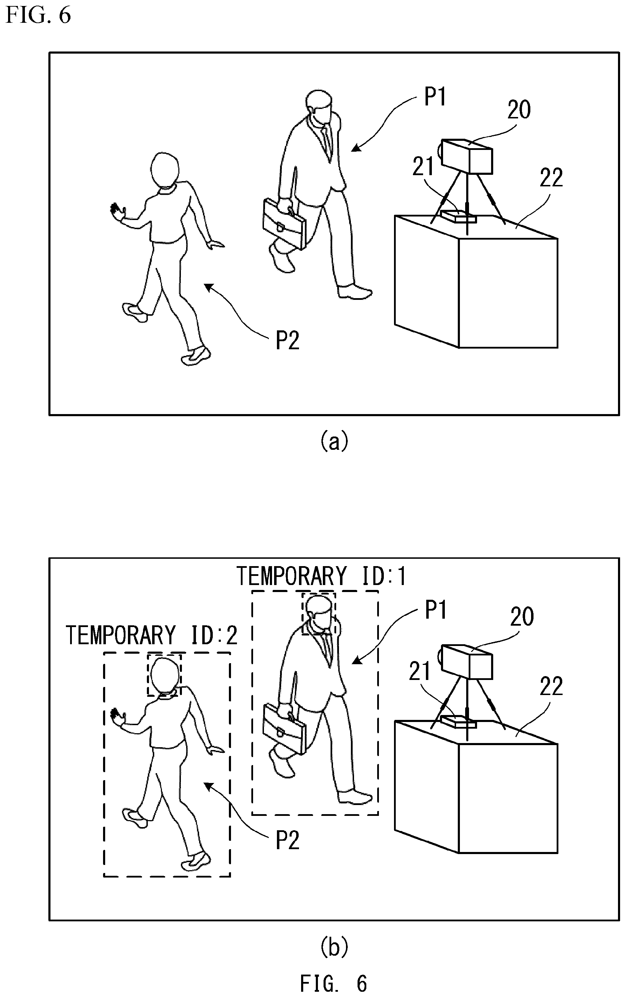

More specifically, the head information generation unit 121 periodically acquires the wide area image from the monitoring camera 10. As illustrated in FIG. 6(a), for example, when the wide area image is acquired, as illustrated in FIG. 6(b), the head information generation unit 121 performs person detection on all persons P1, P2 appearing in the wide area image based on a known person detection technique using Open CV. When the person detection is performed, the head information generation unit 121 assigns a temporary ID to each of the persons P1, P2. For example, the head information generation unit 121 assigns the temporary ID "1" to the person P1 and assigns the temporary ID "2" to the person P2.

When the temporary ID is assigned, the head information generation unit 121 performs face detection (or face recognition) from each of the persons P1, P2 based on a known face detection technique (or face recognition technique) using Open CV, and acquires a detected head image. When the head information generation unit 121 acquires the detected head image, the head information generation unit 121 calculates a head direction vector of each of the persons P1, P2 based on a known head direction estimation technique (or face direction estimation technique) such as HOPE-Net and Face Rig and the detected head image.

This head direction estimation technique includes a process of detecting six coordinates serving as landmarks, such as the outer corners of both eyes, the tips of the nose, and the corners of the mouth from the detected head image, and calculating a virtual position of a camera based on the detected coordinates to estimate the head direction. The head direction (or the face direction) of each of the persons P1, P2 is estimated by the head direction vector calculated by the head information generation unit 121.

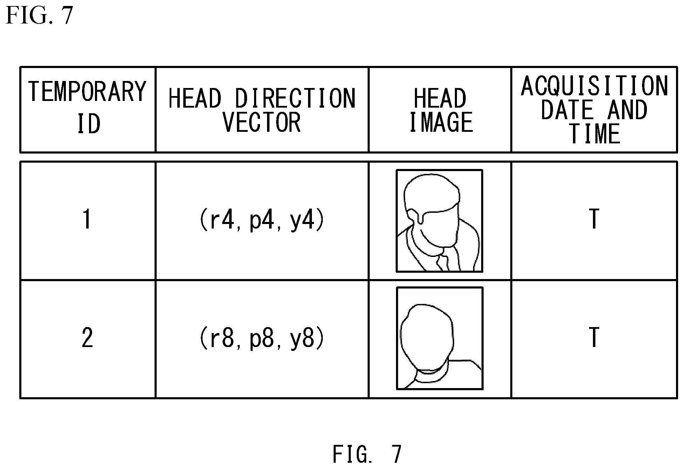

As described above, when the head direction vector is calculated, the head information generation unit 121 saves the second head information in which the temporary ID, the head direction vector, the detected head image, and the acquisition date and time of the wide area image are associated with each other in the head information DB 112. As a result, as illustrated in FIG. 7, the head information DB 112 stores the second head information of each of the persons P1, P2.

The second head information includes a plurality of items such as a temporary ID, a head direction vector, a head image, and an acquisition date and time. In the item of temporary ID, the temporary ID is registered. In the item of the head direction vector, the head direction vector is registered. The head direction vector may be represented by, for example, a roll angle "r4", a pitch angle "p4 ", a yaw angle "y4", etc. In the item of the head image, the detected head image is registered. In the item of the acquisition date and time, the acquisition date and time is registered. The acquisition date and time is represented by, for example, YYYYMMDDHHMMSS format. The head information generation unit 121 generates the first head information basically in the same manner as the second head information except for the acquisition date and time, and the details of the generation of the first head information will be described later.

The person identification unit 122 specifies the same person and identifies the person based on the first head information and the second head information. More specifically, the person identification unit 122 determines whether or not each detected head image satisfies a predetermined condition from among the detected head images included in the second head information, and selects a specific detected head image that satisfies the predetermined condition. The predetermined condition is, for example, a condition of a head direction vector included in the first head information and a head direction vector included in the second head information. That is, the predetermined condition is a condition relating to the angle of the head direction. When the head direction vectors are in the closest approximate relationship, that is, when angles of the head directions are in the closest approximate relationship, the person identification unit 122 determines that the predetermined condition is satisfied.

In this case, the person identification unit 122 selects a detected head image associated with a head direction vector that is closest to the head direction vector included in the first head information as a specific optimum head image for each temporary ID. Then, the person identification unit 122 compares the optimum head image of each temporary ID with the head image authenticated by the authentication camera 20, and associates the identical person ID obtained as the authentication result with either of the specific persons P1, P2 corresponding to the optimum head image for which the degree of similarity equal to or greater than the threshold degree of similarity has been calculated.

Thus, even if the persons P1, P2 appear in the wide area image, the person identification unit 122 can accurately specify the person P1 as a person to be subjected to the authentication process. Thereafter, the person identification unit 122 can track the person P1 based on each wide-area image of the plurality of monitoring cameras 10, 11, 12, 13, 14, 15. The person identification unit 122 may select a detected head image associated with a head direction vector that is closest to the head direction vector included in the first head information and a head direction vector that is second closest to the head direction vector included in the first head information as a specific optimum head image for each temporary ID.

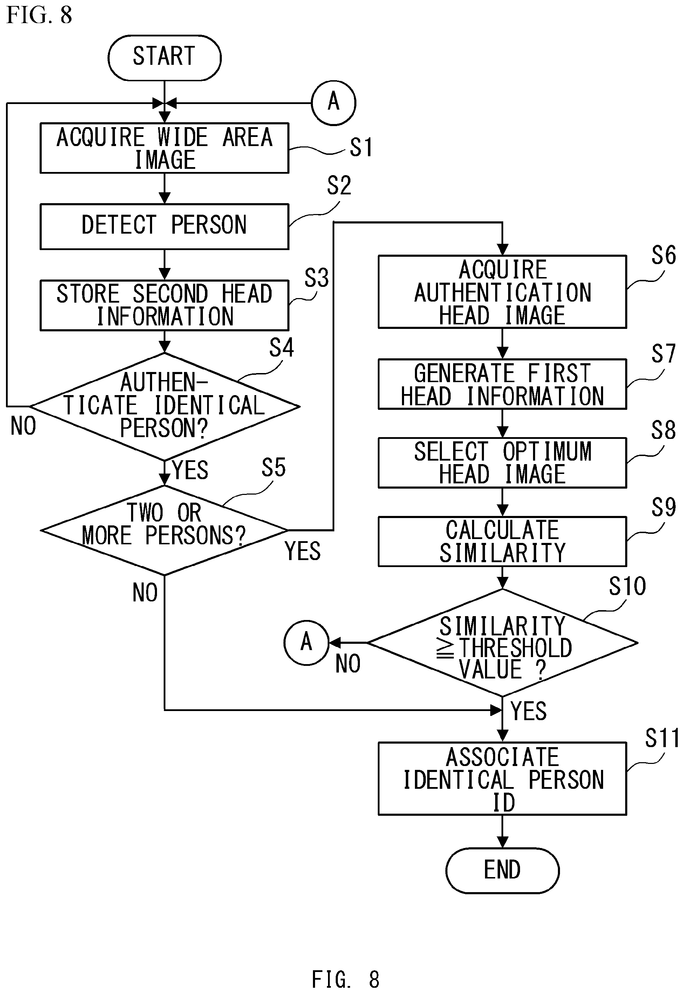

Next, referring to FIGS. 8 to 14, an example of the operation of the person authentication device 100 will be described.

First, as illustrated in FIG. 8, the head information generation unit 121 acquires the wide area image from the monitoring camera 10 (step S1). When the wide area image is acquired, the head information generation unit 121 performs the person detection (step S2), and saves the second head information in the head information DB 112 (step S3). After the second head information is saved, the head information generation unit 121 determines whether or not the identical person is authenticated (step S4). For example, as long as the person P1 does not cause the authentication information reader 21 to read the biometric information of the person P1 himself or the card information of the person P1, the head information generation unit 121 determines that the identical person is not authenticated (step S4: NO). Thus, the head information generation unit 121 repeats the processing from the steps S1 to S3.

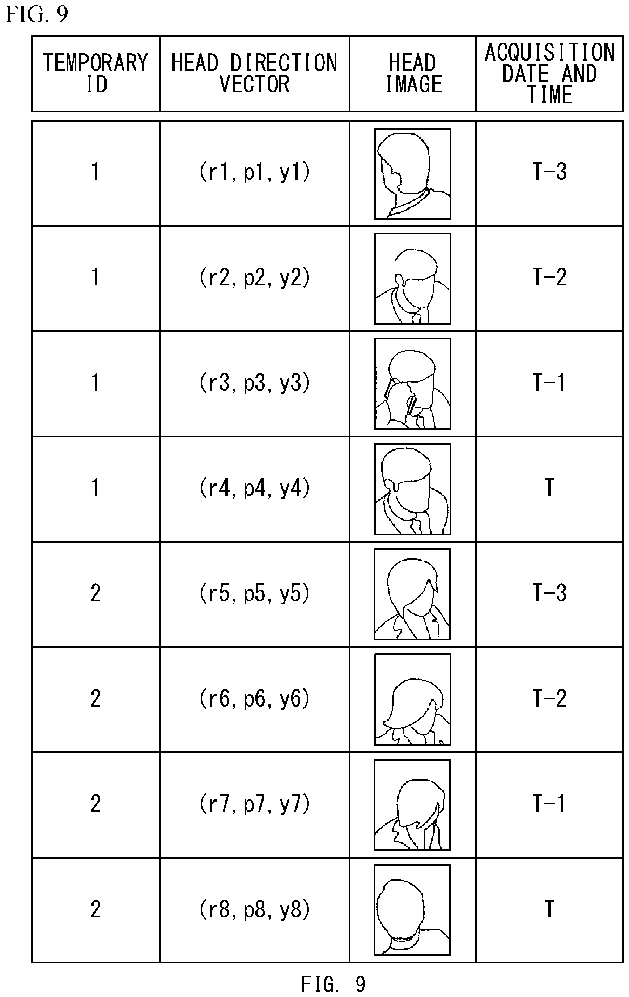

As a result, as illustrated in FIG. 9, the head information DB 112 stores the plurality of second head information while adding them in units of several seconds. The head information generation unit 121 may save the second head information in the head information DB 112 until a predetermined storage period (for example, several minutes) and delete the second head information whose storage period has passed from the head information DB 112. This makes it possible to suppress a decrease in the storage capacity of the head information DB 112.

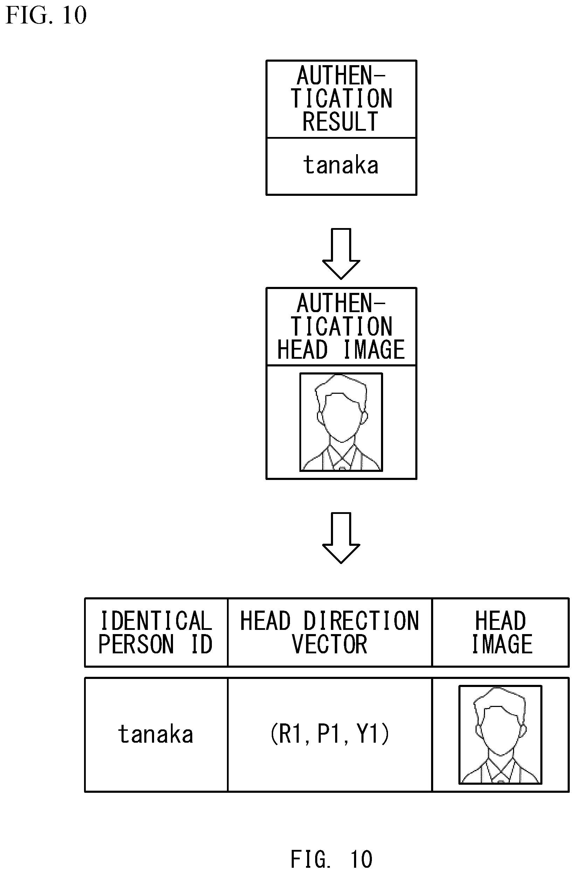

Here, for example, when the person P1 performs an authentication action of causing the authentication information reader 21 to read the biological information of the person P1 himself, the head information generation unit 121 determines that the identical person has been authenticated (step S4: YES). When the identical person is authenticated, the head information generation unit 121 acquires the biometric information of the person P1 from the authentication information reader 21. Thus, the head information generation unit 121 can specify the person ID "tanaka" of the person P1 as the authentication result based on the biometric information and the authentication information (see FIG. 5A) stored in the authentication information DB 111, as illustrated in the upper part of FIG. 10. When the authentication result is specified, the head information generation unit 121 determines whether or not two or more persons appear in the latest wide-area image (step S5).

For example, when two or more persons appear in the wide area image because the persons P1, P2 appear in the wide area image (see FIG. 6(a)) (step S5: YES), the head information generation unit 121 acquires the authentication head image from the authentication camera 20 (step S6). That is, the person P1 who has performed the authentication action on the authentication information reader 21 faces forward and remains at a position less than 1m (meter) in front of the authentication camera 20. Therefore, as illustrated in the middle part of FIG. 10, the head information generation unit 121 can acquire the authentication head image captured by the authentication camera 20 with high accuracy.

When the authentication head image is acquired, the head information generation unit 121 generates the first head information (step S7) and holds the first head information. That is, as illustrated in the lower part of FIG. 10, the head information generation unit 121 generates and holds the first head information in which the person ID "tanaka" specified as the authentication result, the authentication head image, and the head direction vector calculated based on the authentication head image are associated with each other.

The first head information includes a plurality of items such as an identical person ID, a head direction vector, and a head image. In the item of the identical person ID, the identical person ID specified as the authentication result is registered. In the item of the head direction vector, the head direction vector calculated based on the authentication head image is registered. In the item of the head image, the authentication head image is registered. As described above, the first head information is different from the second head information in that the first head information does not include the acquisition date and time.

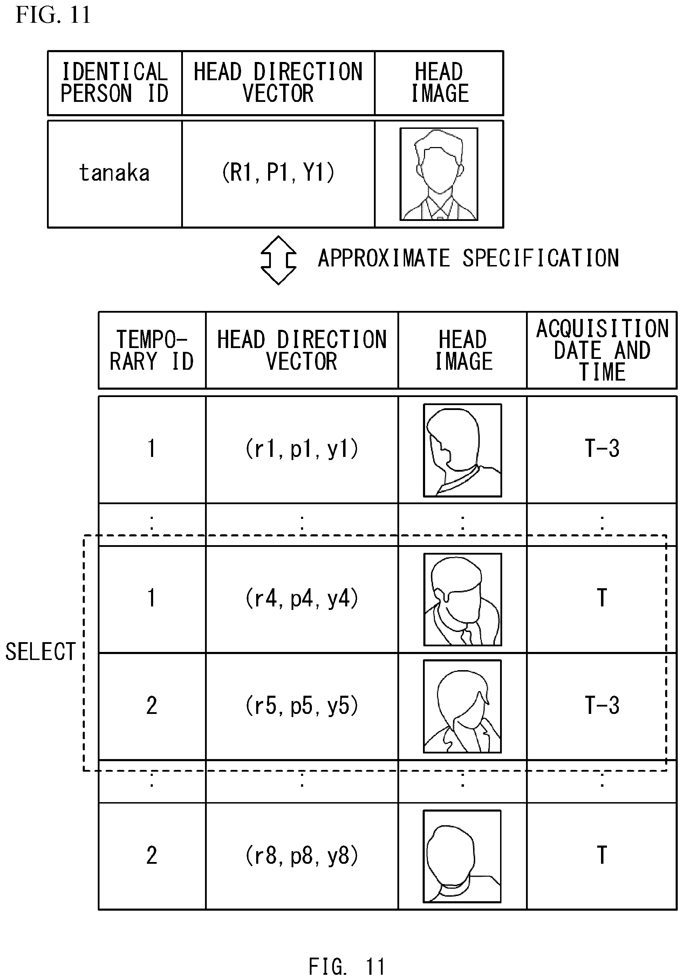

When the first head information is generated and holded, the person identification unit 122 selects the optimum head image (step S8). More specifically, as illustrated in FIG. 11, the person identification unit 122 calculates a vector difference between the head direction vector included in the first head information and the head direction vector included in the second head information for each angle. Thus, the vector difference of the roll angle, the pitch angle, and the yaw angle is calculated. After the vector difference is calculated, the person identification unit 122 calculates a sum by squaring the vector difference of each angle, and selects a head image associated with the head direction vector having the smallest sum as the specific optimum head image for each temporary ID. That is, the person identification unit 122 specifies the head direction vector that is most approximate to the head direction vector included in the first head information from among the second head information based on the least squares method. The person identification unit 122 selects the detected head image associated with the specified head direction vector as the specific optimum head image for each temporary ID.

In the present embodiment, as illustrated in FIG. 11, the person identification unit 122 selects the detected head image of the second head information including the temporary ID "1" and the head direction vector "r4, p4, y4" as the specific optimum head image. The person identification unit 122 selects the detected head image of the second head information including the temporary ID "2" and the head direction vector "r5, p5, y5" as the specific optimum head image.

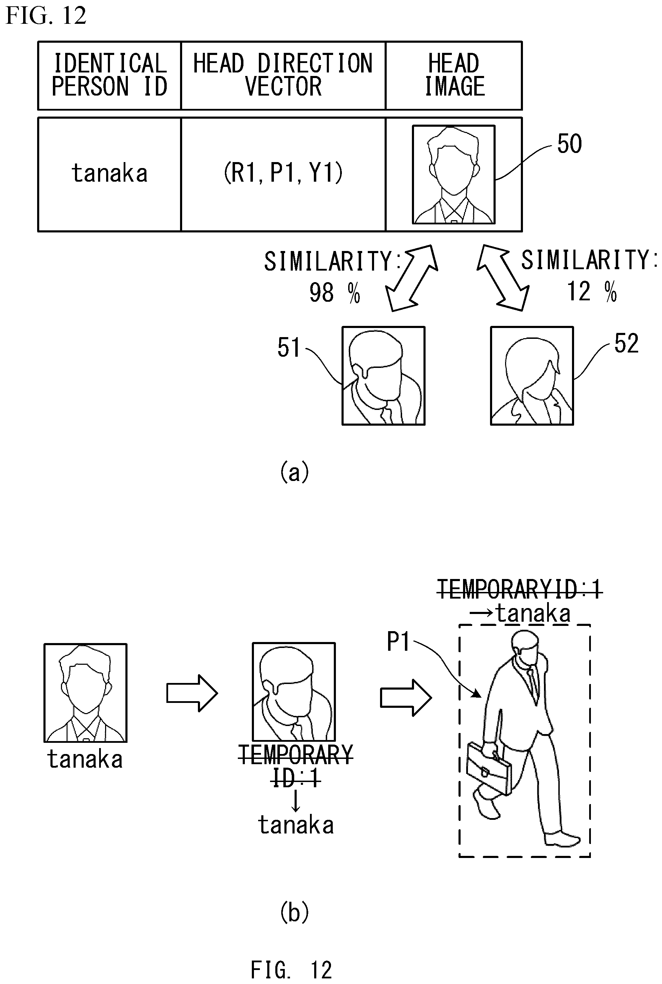

When the optimum head image is selected, the person identification unit 122 calculates the degree of similarity (step S9). More specifically, as illustrated in FIG. 12(a), the person identification unit 122 calculates the image feature amount of an authentication head image 50 included in the first head information and the image feature amounts of selected two optimum head images 51, 52, and calculates the respective similarities between the authentication head image 50 and the optimum head images 51, 52 based on the image feature amounts. For example, the person identification unit 122 can calculate the image feature amount based on the color of hair and the outline of the face belonging to the head of the authentication head image 50 and the optimum head images 51, 52, and calculate the degree of similarity.

In the present embodiment, the person identification unit 122 calculates 98% as the similarity between the authentication head image 50 included in the first head information and the optimum head image 51 associated with the temporary ID "1". The person identification unit 122 calculates 12% as the similarity between the authentication head image 50 included in the first head information and the optimum head image 52 associated with the temporary ID "2". Since the number of the optimum head images to be subjected to the similarity calculation is reduced in advance by the head direction vector, the person identification unit 122 can complete the similarity calculation in a shorter time than in the case where all the similarities are calculated.

When the similarity is calculated, the person identification unit 122 determines whether or not the similarity is equal to or greater than a threshold value (step S10). More specifically, the person identification unit 122 determines whether the similarity is equal to or greater than a threshold similarity for each optimum head image. The threshold similarity can be set appropriately in advance, and in the present embodiment, for example, 90% is set as the threshold similarity. When all the similarities are less than the threshold value (step S10: NO), the head information generation unit 121 returns to the processing of step S1.

On the other hand, when any of the similarities is equal to or greater than the threshold value (step S10: YES), the person identification unit 122 associates the identical person ID (step S11) and ends the processing. More specifically, as illustrated in FIG. 12(b), the person identification unit 122 associates the identical person ID with the optimum head image 51 by replacing the temporary ID "1" associated with the optimum head image 51 for which the similarity equal to or greater than the threshold value is calculated with the identical person ID "tanaka". Further, the person identification unit 122 associates the identical person ID with the optimum head image 51 by replacing the temporary ID "1" associated with the person P1 appearing in the wide area image with the identical person ID "tanaka". In this way, the person identification unit 122 can identify the person P1 appearing in the wide area image and the person P1 who is the target of the authentication process.

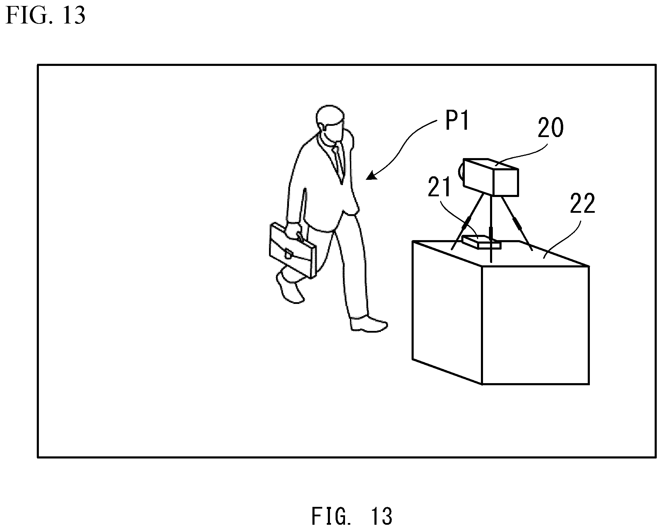

In the processing of step S5, when two or more persons do not appear in the wide area image (step S5: NO), the person identification unit 122 executes the processing of step S10 and ends the processing. For example, as illustrated in FIG. 13, when the person P1 appears alone in the wide area image, the person identification unit 122 can uniquely identify the person P1 as the target person to which the identical person ID is associated because the person P2 does not appear in the wide area image. In this way, when two or more persons do not appear in the wide area image, the head information generation unit 121 and the person identification unit 122 can avoid the processing of steps S6 to S10. That is, when two or more persons do not appear in the wide area image, the person identification unit 122 can associate the identical person ID in a short time with a reduced processing load.

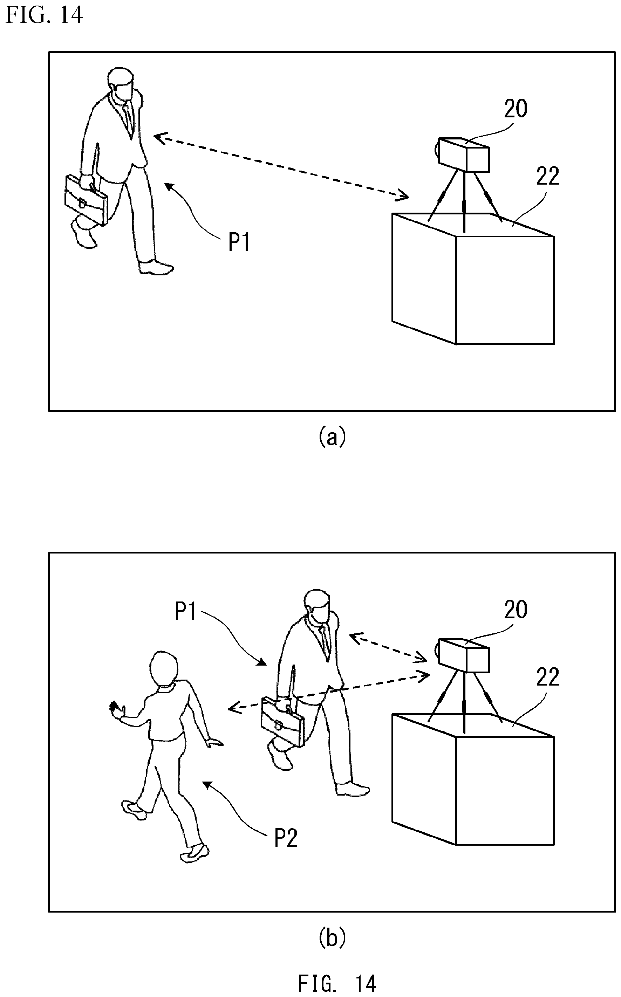

As illustrated in FIG. 14(a), when the authentication camera 20 is the face authentication camera, if the distance between the person P1 and the authentication camera 20 is, for example, 1m or more, the authentication camera 20 may not be able to accurately capture the authentication head image of the person P1. When the authentication information reader 21 is used, the person P1 approaches the authentication information reader 21, and therefore, the distance between the person P1 and the authentication camera 20 is likely to be less than 1m. However, when the face authentication camera is used, the distance between the person P1 and the authentication camera 20 may be 1m or more, and the authentication head image of the person P1 may not be accurately captured.

Therefore, when the face authentication camera is used, if two or more persons appear in the wide area image in the processing of step S5, immediately after the processing, the head information generation unit 121 determines whether or not the distances between the persons P1, P2 and the authentication camera 20 are less than a threshold distance, as illustrated in FIG. 14(b). The head information generation unit 121 can determine whether or not the distances between the persons P1, P2 and the authentication camera 20 are less than the threshold distance based on a plurality of objects included in the wide area image. The threshold distance may be several meters, such as 1 meter, or several tens of centimeters.

When both the distance between the person P1 and the authentication camera 20 and the distance between the person P2 and the authentication camera 20 are equal to or greater than the threshold distance, the head information generation unit 121 may determine that the person to be authenticated is absent and return to the processing of step S1. Thus, the head information generation unit 121 and the person identification unit 122 can avoid the processing of steps S6 to S10.

On the other hand, when the distance between the person P1 and the authentication camera 20 is less than the threshold distance and the distance between the person P2 and the authentication camera 20 is equal to or greater than the threshold distance, the person identification unit 122 may uniquely identify the person P1 as the target person for the authentication process. In this case, the head information generation unit 121 and the person identification unit 122 can also avoid the processing of steps S6 to S10.

When both the distance between the person P1 and the authentication camera 20 and the distance between the person P2 and the authentication camera 20 are less than the threshold distance, the head information generation unit 121 and the person identification unit 122 may execute the processing of step S10 after executing the processing of steps S6 to S9.

Although the preferred embodiments of the present invention have been described in detail, the present invention is not limited to the specific embodiments, and various modifications and changes are possible within the scope of the gist of the present invention described in the claims.

For example, the person identification unit 122 determines whether or not to select the specific optimum head image satisfying the predetermined condition based on the degree of association between the facility in the monitoring target area AR and the type of clothing customarily used in the facility. When the degree of association is higher than the threshold degree of association, the person identification unit 122 avoids selecting the specific optimum head image that satisfies the predetermined condition. For example, when a person wearing a white coat which is conventionally used in a facility such as a hospital appears in the wide area image, it is assumed that the possibility of performing an illegal action is low. Therefore, the person identification unit 122 can limit the tracking target to a part of persons by excluding such persons from the tracking target, and can identify persons with a reduced processing load.

### DESCRIPTION OF SYMBOLS

- ST: Person monitoring system
- AR: Monitoring target area
- P1, P2: Person
- 10, 11, 12, 13, 14, 15: Monitoring camera
- 20: Authentication camera
- 21: Authentication information reader
- 100: Person authentication device
- 110: Memory unit
- 111: Authentication information DB
- 112: Head information DB
- 120: Processing unit
- 121: Head information generation unit
- 122: Person identification unit

## Claims

1. A person authentication program for causing a computer to execute a process, the computer being connected to a first camera for capturing an image of one or more persons present in a monitoring target area as a whole and a second camera for capturing an image of a head of a person when the person is individually authenticated at an entrance of the monitoring target area, the process comprising:
selecting a specific head image satisfying a condition from among head images representing the head of the person appearing in the image captured by the first camera when the person is recognized as being in front of the second camera;
comparing the specific head image with the image captured by the second camera; and
associating an identifier obtained as an authentication result with a specific person corresponding to the specific head image for which a degree of similarity equal to or greater than a threshold degree of similarity is calculated.

2. The person authentication program according to claim 1, **characterized in that** the process of selecting of the specific head image includes selecting the specific head image whose head direction is similar to that of the head image appearing in the image captured by the second camera from among the head images representing the head of the person appearing in the image captured by the first camera when the person is recognized as being in front of the second camera based on the image captured by the first camera.

3. The person authentication program according to claim 1 or 2, **characterized in that** the process of selecting of the specific head image includes detecting a head of the person appearing in the image captured by the first camera when the person is recognized as being in front of the second camera based on the image captured by the first camera, saving information in which a head image representing a detected head, a head direction estimated based on the head image, and a temporary identifier for identifying the person corresponding to the head image for each unit time are associated with each other in a database until a storage period of the information, and deleting the information for which the storage period has passed from the database.

4. The person authentication program according to claim 1 or 2, **characterized in that** the process of selecting of the specific head image includes avoiding selecting the specific head image satisfying the condition when the person in front of the second camera is recognized as being alone based on the image captured by the first camera.

5. The person authentication program according to claim 1 or 2, **characterized in that** the process of selecting of the specific head image includes avoiding selecting the specific head image satisfying the condition when the person is recognized to be present at a position away from the front of the second camera by a threshold distance or more based on the image captured by the first camera.

6. The person authentication program according to claim 1 or 2, **characterized in that** the process of selecting of the specific head image includes determining whether or not to select the specific head image satisfying the condition based on a degree of association between a facility in the monitoring target area and a type of clothing customarily used in the facility, and avoiding selecting the specific head image satisfying the condition when the degree of association is higher than a threshold degree of association.

7. The person authentication program according to claim 1 or 2, **characterized in that** the second camera is a face authentication camera for authenticating the face of the person.

8. The person authentication program according to claim 1 or 2, **characterized in that** the second camera is installed within an imaging range of the first camera.

9. A person authentication method implemented by a computer, the computer being connected to a first camera for capturing an image of one or more persons present in a monitoring target area as a whole and a second camera for capturing an image of a head of a person when the person is individually authenticated at an entrance of the monitoring target area, the person authentication method comprising:
selecting a specific head image satisfying a condition from among head images representing the head of the person appearing in the image captured by the first camera when the person is recognized as being in front of the second camera;
comparing the specific head image with the image captured by the second camera; and
associating an identifier obtained as an authentication result with a specific person corresponding to the specific head image for which a degree of similarity equal to or greater than a threshold degree of similarity is calculated.

10. A person authentication device that is connected to a first camera for capturing an image of one or more persons present in a monitoring target area as a whole and a second camera for capturing an image of a head of a person when the person is individually authenticated at an entrance of the monitoring target area, the person authentication device comprising:
a selection unit that selects a specific head image satisfying a condition from among head images representing the head of the person appearing in the image captured by the first camera when the person is recognized as being in front of the second camera; and
an association unit that compares the specific head image with the image captured by the second camera, and associates an identifier obtained as an authentication result with a specific person corresponding to the specific head image for which a degree of similarity equal to or greater than a threshold degree of similarity is calculated.

11. The person authentication device according to claim 10, **characterized in that** the selection unit selects the specific head image whose head direction is similar to that of the head image appearing in the image captured by the second camera from among the head images representing the head of the person appearing in the image captured by the first camera when the person is recognized as being in front of the second camera based on the image captured by the first camera.

12. The person authentication device according to claim 10 or 11, **characterized in that** the selection unit detects a head of the person appearing in the image captured by the first camera when the person is recognized as being in front of the second camera based on the image captured by the first camera, saves information in which a head image representing a detected head, a head direction estimated based on the head image, and a temporary identifier for identifying the person corresponding to the head image for each unit time are associated with each other in a database until a storage period of the information, and deletes the information for which the storage period has passed from the database.

13. The person authentication device according to claim 10 or 11, **characterized in that** the selection unit avoids selecting the specific head image satisfying the condition when the person in front of the second camera is recognized as being alone based on the image captured by the first camera.

14. The person authentication device according to claim 10 or 11, **characterized in that** the selection unit avoids selecting the specific head image satisfying the condition when the person is recognized to be present at a position away from the front of the second camera by a threshold distance or more based on the image captured by the first camera.

15. The person authentication device according to claim 10 or 11, **characterized in that** the selection unit determines whether or not to select the specific head image satisfying the condition based on a degree of association between a facility in the monitoring target area and a type of clothing customarily used in the facility, and avoids selecting the specific head image satisfying the condition when the degree of association is higher than a threshold degree of association.

16. The person authentication device according to claim 10 or 11, **characterized in that** the second camera is a face authentication camera for authenticating the face of the person.

17. The person authentication device according to claim 10 or 11, **characterized in that** the second camera is installed within an imaging range of the first camera.
